# EUROPEAN PATENT SPECIFICATION

(11) **EP 2 335 860 B1**
(45) Date of publication and mention of the grant of the patent: **25.06.2014**
(21) Application number: 10194301.7
(22) Date of filing: 09.12.2010
(51) Int. Cl.: B23K 11/31, B23K 11/36, F16C 17/10

(54) **Means, i.e. welding gun, for sandwiching an object with bearing installation structure and method of installing such bearing structure in such means**
Mittels, d.h. Schweisszange, zum Spannen von Gegenständen mit einer Lagerstruktur und Verfahren zur Installation einer solchen Lagerstruktur
Moyens, par exemple pince de soudage, pour serrer des objets avec une structure de roulements et procédé d'installation d'une telle structure de roulement

(30) Priority: 21.12.2009 JP 2009289513
(43) Date of publication of application: 22.06.2011
(73) Proprietor: Honda Motor Co., Ltd., Tokyo 107-8556 (JP)
(72) Inventor: Matsumoto, Koichi, Tochigi 321-3395 (JP); Kobayashi, Teruaki, Tochigi 321-3395 (JP); Miwa, Hiroshi, Tochigi 321-3395 (JP)
(74) Representative: Beder, Jens

(56) References cited:
- FR-A1- 2 559 411
- JP-A- 2002 239 740
- US-A- 4 594 049

## Description

The present invention relates to means for sandwiching an object, especially a welding gun, and an installation method according to the preamble of claims 1 and 2. More specifically, the present invention relates to an installation structure of bearings that reduces the damage occurring due to tightening bearings, and makes operation and maintenance easy.

### Related Art

Conventionally, roller bearings have been used as bearings supporting a fulcrum shaft for pivotally supporting gun arms of an X-type welding gun provided with electrode tips at the leading ends thereof (e.g., refer to Japanese Unexamined Patent Application Publication No. 2002-178160). In such gun arms, pretension is applied to the bearings supporting the fulcrum shaft, so as to raise the rigidity of the bearings and thus reduce vibration of the fulcrum shaft, thereby preventing the vibration transferring to the electrode portions provided in the leading ends of the gun arms. Therefore, in a case of using roller bearings as bearings of the fulcrum shaft, it is necessary to impart pretension to the bearings in order to prevent vibration of the leading ends of the gun arms. As a result thereof, such roller bearings have been made in a pretension-structure in which the bearings are tightened with a constant pressure using a bearing nut.

JP 2002 239740 A, on which is based the preamble of claims 1 and 2, discloses an X-shape welding gun with which a welding is performed at a desired position while the trace of displacement of the welding gun is kept constant.

SOLUTION: Arm holders 28 and 30 on which a pair of gun arms 20 and 22 are attached are supported on a supporting axis 18 which is journaled on a gun bracket 14 in a manner that the holders freely rock. A piston rod 56 of a pressurizing cylinder 52 is engaged with the gun arm 20, and the pressurizing cylinder 52 is provided at a cylinder bracket 50 which is attached to the arm holder 30 in a manner that the pressurizing cylinder moves so as to tilt.; A pair of bearing pins 62 and 64 are pivoted via a bearing bush 66 on bearing links 68a and 68b which are attached on the gun bracket 14 in a manner that the pair of bearing pins 62 and 64 are in nearly parallel with and separated from the supporting axis 18 by a prescribed distance. The bearing pins 62 and 64 are integrally formed by a pin 92, bearing members 82 each having such an elastic body 80 as rubber disposed between an inner case 74 and an outer case 78 are provided at shafts 70 and 72, and an arm holder 30 is journaled on the bearing links 68a and 68b.

US 4 594 049 A discloses a robot articulation device which includes a first arm pivoted on a support stand for rotation about a first axis and a second arm is pivotally mounted on the free end of the first arm for rotational movement about a second axis. The first and second axes may be vertically or horizontally disposed. Opposed recessed are located in the first and second arms concentric with the second axis and a sleeve secured to one of the arms extends into the recess in the other arm. A projection is secured to the other arm and extends into the sleeve and bearings are disposed between the projection and the sleeve and the sleeve and the recess, respectively. A gear reduction unit is located in the other recess and is provided with an input shaft which may be driven from a drive motor mounted on the support stand.

### SUMMARY OF THE INVENTION

However, torque management of the pretension force imparted to this pretension structure requires special tools such as a torque wrench. As a result, when a tightening load higher than prescribed is applied to a bearing as a result of imparting a pretension force by using a regular tightening tool such as a spanner, an excessive load may be applied to a casting, which is a structure having the bearing installed therein, and cause the casting to be damaged. In addition, the bearing service life may be considerably reduced as a result of applying a pretension force higher than prescribed to the bearing. The above fact may cause the operation and maintenance for maintaining bearings to be complicated, as well as a production line employing machines provided with bearings to be stopping due to operation and maintenance or repair of damage, thereby inviting a decline in the rate of operation of the production line.

It is an object of the present invention to provide means for sandwiching object and an installation method thereof that can reduce the damage occurring from tightening bearings that support a fulcrum shaft, as well as facilitating the operation and maintenance of the bearing.

According to the present invention, such means and such method are defined in claims 1 and 2.

According to the present invention, one among the inner race and the outer race is fixed in the axial direction, and the other one among the inner race and outer race that is not fixed is movable in a direction in which there is no longer a radial gap or axial gap between the inner race, outer race and revolving body in the axial direction. Therefore, in a case of the outer race of a bearing being set as the one that is fixed, since the inner race, which is the other one, will be movable in the axial direction, the inner race, which is the other one, will shift in the axial direction relative to the outer race from tightening the bearing. As a result thereof, due to the one among the inner race and outer race of the bearing being fixed, and the other one providing a gap in the axial direction, the inner race and the outer race will mutually shift from tightening the bearing, and there will no longer be play in the bearing, even if a large amount of torque is not applied when the bearing is tightened. Therefore, since the bearing can be fixed with a small amount of torque, it is possible to reduce the damage to a casting in which a bearing is installed. In addition, since play in the bearing can be prevented by simply fixing the bearing with a small amount of torque, it is possible to reduce the time spent in operation and maintenance for repairing bearings, and make a structure for which operation and maintenance is easy.

In this case, it is desirable to install a conical spring between tightening means that tighten and fix the bearing so as to support the fulcrum shaft relative to the gun arms.

According to the present invention, it is possible to make a structure for which torque management is easy, since the torque from tightening can be simply calculated by measuring a compression amount of the conical spring from a dimension of the conical spring that changes from tightening, or the like. In addition, since the biasing force generated by the conical spring is constant after tightening, it is possible to prevent a tightening load above a specified amount from acting on the bearing by managing the dimension of the conical spring, which changes by compression. Furthermore, since pretension management can be performed simply by tightening so that the height of the conical spring is a constant dimension, a technician that performs maintenance in a production line in which welding guns including bearings are provided can easily manage the bearings at the pretension amount that had been specified, without requiring special tools.

According to a method of the present invention, in a method for installing a bearing that supports a fulcrum shaft pivotally supporting a gun arm constituting a welding gun to be rotatable, and receives a combined load of an axial load acting in an axial direction of the fulcrum shaft and a radial load acting in a radial direction of the fulcrum shaft, the method includes steps of: fixing one race, among an inner race and an outer race constituting the bearing, in an axial direction; installing an other race among the inner race and the outer race to be movable in the axial direction; causing the other race among the inner race and the outer race to move relative to the one race among the inner race and the outer race when assembling the bearing; shifting the inner race and the outer race relatively in the axial direction; and fixing in a state in which there is no longer a radial gap or axial gap between a revolving body, disposed between the inner race and the outer race to freely revolve, and the inner race and the outer race, respectively.

According to the present invention, one race among the inner race and the outer race is fixed in the axial direction, and the other race among the inner race and the outer race that is not fixed is movable in a direction in which there is no longer a radial gap or axial gap between the inner race, the outer race and the revolving body in the axial direction. Therefore, in a case of the outer race of the bearing having been set as the one fixed, since the inner race, which is the other one, is movable in the axial direction, the inner race, which is the other one, will shift in the axial direction relative to the outer race, from tightening the bearing. As a result thereof, due to the one among the inner race and outer race of the bearing being fixed, and the other one providing a gap in the axial direction, the inner race and the outer race will mutually shift from tightening the bearing, and there will no longer be play in the bearing, even if a large amount of torque is not applied when tightening the bearing. Therefore, since the bearing can be fixed with a small amount of torque, it is possible to reduce the damage to a casting in which a bearing is installed. In addition, since play in the bearing can be prevented by simply fixing the bearing with a small amount of torque, it is possible to reduce the time spent in operation and maintenance for repairing bearings, and make a structure for which operation and maintenance is easy.

In this case, it is desirable to tighten the bearing in a state in which a conical spring is installed between tightening means that tighten and fix the bearing so as to support the fulcrum shaft relative to the gun arm.

According to the present invention, it is possible to make a structure for which torque management is easy, since the torque from tightening can be simply calculated by measuring a compression amount of the conical spring such as a dimension of the conical spring that changes from tightening, or the like. In addition, since the biasing force generated by the conical spring is constant after tightening, it is possible to prevent a tightening load above a specified amount from acting on the bearing by managing the dimension of the conical spring, which changes by compression. Furthermore, since pretension management can be performed simply by tightening so that the height of the conical spring is a constant dimension, a technician that performs maintenance in a production line in which welding guns including bearings are provided can easily perform manage the bearings at the pretension amount that had been specified, without requiring special tools.

According to the present invention, it is possible to reduce damage, while making operation and maintenance on bearings supporting a fulcrum shaft that pivotally supports a gun arm easy.

### BRIEF DESCRIPTION OF THE DRAWINGS

FIG 1 is a three-dimensional side view of a welding gun provided with bearings installed as an installation structure of bearings according to an embodiment of the present invention;
FIG. 2 is a cross-sectional view, taken along a cross-section A-A of the welding gun in FIG 1;
FIG. 3 is partially enlarged cross-sectional view showing inside of a bearing installed as the installation structure in FIG. 1;
FIG. 4 is a partially enlarged cross-sectional view showing inside of a conical spring contacting with a bearing installed as the installation structure in FIG. 1; and
FIG 5 is a partially enlarged cross-sectional view showing inside of a bearing installed as the installation structure in FIG. 1.

### DETAILED DESCRIPTION OF THE INVENTION

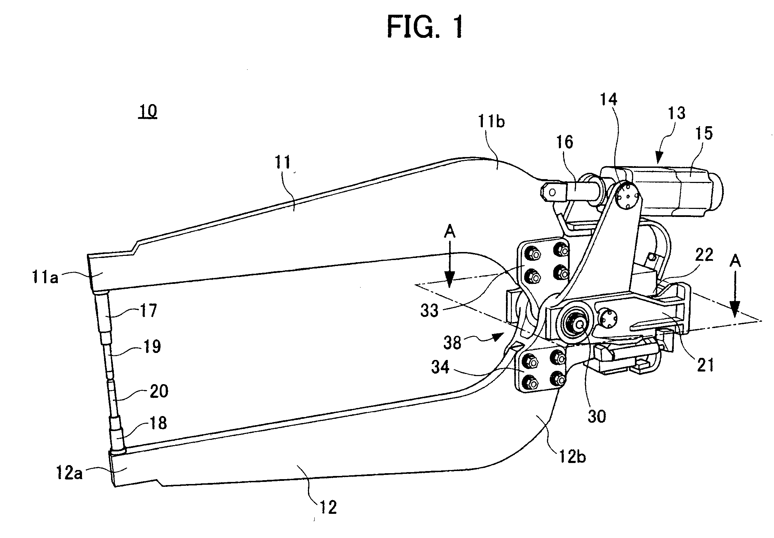

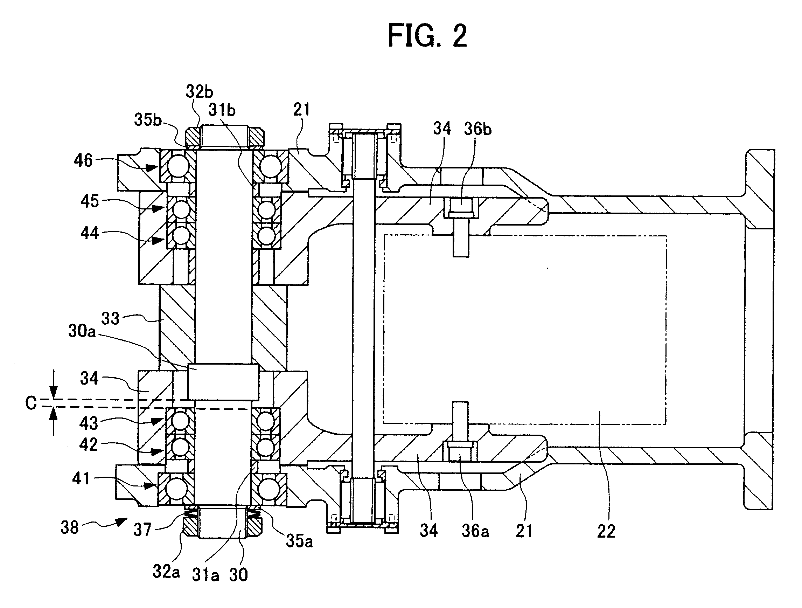

FIG. 1 is a three-dimensional side view of a welding gun 10 provided with bearings installed as an installation structure 3 of bearings according to an embodiment of the present invention. The welding gun 10 shown in FIG. 1 is used to be mounted on a leading end of a robot arm and designed to pivotally support an upper and lower pair of gun arm, which are constituted by a first gun arm 11 and a second gun arm 12 that open and close by way of an pneumatic cylinder 13, at a fulcrum shaft 30 provided at a leading end of a gun bracket 21 attached to the leading end of the arm of the robot that is not illustrated. Furthermore, the welding gun 10 is adapted to move a plurality of spot positions on a work (not illustrated) sequentially and perform welding, as described below. As shown in FIG 2, the gun arms are pivotally supported by a plurality of bearings including a first bearing 41, a second bearing 42, a third bearing 43, a fourth bearing 44, a fifth bearing 45 and a sixth bearing 46 at the fulcrum shaft 30. In particular, the first bearing 41, the second bearing 42 and the third bearing 43 are installed as an installation structure 38 according to the present embodiment. The bearings installed as this installation structure 38 pivotally support the upper and lower pair of gun arms constituted by the first gun arm 11 and the second gun arm 12, which open and close by way of the pneumatic cylinder 13.

The welding gun 10 is constituted as an X-type welding gun that opens and closes between a first electrode tip 19 and a second electrode tip 20 provided to the leading ends of the first gun arm 11 and second gun arm 12, respectively, by opening and closing the first gun arm 11 and the second gun arm 12 fixed to each other with the fulcrum shaft 30 supported by a plurality of bearings in this way as a pivot point.

The first gun arm 11 includes a first electrode tip 19 with a first tip holder 17 at the leading end portion 11 a thereof. Similarly, the second gun arm 12 includes a second electrode tip 20 with a second tip holder 18 at a leading end portion 12a thereof. The first gun arm 11 is connected with a leading end portion of a first frame 33 at a trailing end portion 11 b thereof. Similarly, the second gun arm 12 is connected with a leading end portion of a second frame 34 at a trailing end portion 12b. In addition, the first gun arm 11 and the second gun arm 12 are pivotally supported by the first bearing 41, the second bearing 42, the third bearing 43, the fourth bearing 44, the fifth bearing 45 and the sixth bearing 46, which are described later with reference to FIG. 2, to freely open and close with the fulcrum shaft 30, which is passing through and pivotally supported by substantially central parts of trailing end portions of the first frame 33 and the second frame 34, as a pivot point.

The pneumatic cylinder 13 is provided with a cylinder main body 15 and a piston rod 16 that is formed to freely project and retract from the cylinder main body 15. The leading end of the piston rod 16 is pivotally supported at the trailing end portion 11 b of the first gun arm 11 to be rotatable, and the leading end of the cylinder main body 15 is pivotally supported with the pneumatic cylinder fixed shaft 14 by a trailing end portion of the second frame 34, which is connected to the second gun arm 12. Spot welding of a work can be performed by causing the piston rod 16 of the pneumatic cylinder 13 to move toward a projecting side, thereby closing the first gun arm 11 and the second gun arm 12 and sandwiching the work between the first electrode 19 and the second electrode tip 20 provided between the first gun arm 11 and the second gun arm 12, and then flowing electrical current between the first electrode tip 19 and the second electrode tip 20 in this state.

In addition, a transformer 22 for supplying electrical power to the first electrode tip 19 and the second electrode tip 20 is disposed at the trailing end portion of the second frame 34. As shown in FIG. 2, the transformer 22 is fixed by fixing threads 36a and 36b provided in both side ends of the second frame 34.

Operation of the welding gun 10 having the installation structure 38 according to the embodiment of the present invention constructed in the above way will be explained. First, in order to make the welding gun 10 enter a closed state from an opened state, air can be supplied to the pneumatic cylinder 13 at a predetermined pressure to cause the piston rod 16 to perform a projecting motion.

The piston rod 16 of the pneumatic cylinder 13 is pivotally supported at the trailing end portion 11 b of the first gun arm 11, and the first gun arm 11 is pivotally supported with the fulcrum shaft 30 by the first frame 33. Therefore, when the piston rod 16 is caused to perform a projecting motion, the first gun arm 11 can pivot the leading end portion 11a of the first gun arm 11 toward the leading end portion 12a of the second gun arm 12 with the fulcrum shaft 30 as the pivot point.

Similarly, the cylinder main body 15 of the pneumatic cylinder 13 is pivotally supported by the trailing end portion 12b of the second gun arm 12 with the trailing end portion of the second frame 34, and the second gun arm 12 is pivotally supported with the fulcrum shaft 30 by a central part of the second frame 34. Therefore, when the piston rod 16 is caused to perform a projecting motion, the second gun arm 12 can pivot the leading end portion 12a of the second gun arm 12 towards the leading end portion 11 a of the first gun arm 11 with the fulcrum shaft 30 as the pivot point, since the cylinder main body 15 moves toward the side opposite to the projecting side of the piston rod 16.

FIG. 2 is a cross-sectional view taken along a cross-section A-A of the welding gun 10 in FIG 1. As shown in FIG. 2, the fulcrum shaft 30 of the welding gun 10 is pivotally supported by a plurality of bearings including the first bearing 41, the second bearing 42, the third bearing 43, the fourth bearing 44, the fifth bearing 45 and the sixth bearing 46. The first bearing 41, the second bearing 42, the third bearing 43, the fourth bearing 44, the fifth bearing 45 and the sixth bearing 46 are installed so as to receive the combined loads composed of both the axial load acting in the axial direction of the fulcrum shaft 30, and the radial load acting in the radial direction thereof.

The first bearing 41 and the sixth bearing 46 are each disposed inside of a gun bracket 21, and the second bearing 42, fifth bearing 45, third bearing 43 and fourth bearing 44 are each disposed in series inside the second frame 34. Then, a first collar 31a and a second collar 31b of short-cylindrical shape are installed between the first bearing 41 and the second bearing 42, and between the sixth bearing 46 and the fifth bearing 45, respectively.

The fulcrum shaft 30 is passing through and installed in each of the first bearing 41, the first collar 31a, the second bearing 42, the third bearing 43, an inner space of the first frame 33, the fourth bearing 44, the fifth bearing 45, the second collar 31b, and the sixth bearing 46 in this order. In addition, U-nuts 32a and 32b are installed as tightening means that tighten and fix the first bearing 41 and the sixth bearing 46 with the fulcrum shaft 30 with respect to the second gun arm 12 of the welding gun 10 at both ends of the fulcrum shaft 30. After the U-nut 32b is attached to one end of the fulcrum shaft 30 in advance, the fulcrum shaft 30 can be fixed applying pretension to the first bearing 41, the second bearing 42, the third bearing 43, the fourth bearing 44, the fifth bearing 45 and the sixth bearing 46, which are installed between the U-nuts 32a and 32b, by tightening the U-nut 32a at the other end of the fulcrum shaft 30.

The conical springs 37 and the washer 35a, which is disposed between a conical spring 37 and the first bearing 41, are installed between the first bearing 41 and the U-nut 32a. The conical springs 37 have elasticity in the axial direction, and thus contract a predetermined dimension in the axial direction of the fulcrum shaft 30 every time when the U-nut 32a is tightened. Consequently, the contracted conical springs 37 press an inner race 41 a of the first bearing 41 through a washer 35a, with a resilience according to the dimension of the conical springs 37 that has been deformed due to contraction.

Therefore, pretension can be applied to each of the first bearing 41, the second bearing 42, the third bearing 43, the fourth bearing 44, the fifth bearing 45 and the sixth bearing 46, which are installed between the U-nuts 32a and 32b, by tightening the U-nuts 32a and 32b installed at both ends of the fulcrum shaft 30.

The first bearing 41, the second bearing 42 and the third bearing 43, which are installed as an installation structure 38 according to the present embodiment, are separated by a gap C up to a step 30a in the fulcrum shaft 30, whereby portions of the first bearing 41, the second bearing 42 and the third bearing 43 are allowed to slide by only the distance of this gap C. In addition, the conical springs 37 are installed between the first bearing 41 and the U-nut 32a. As a result, the torque acting on each bearing among the first bearing 41, the second bearing 42 and the third bearing 43 due to tightening can be simply calculated by measuring the compressed dimension of the conical springs 37, which changes by tightening. Therefore, management of the torque acting on each bearing among the first bearing 41, the second bearing 42 and the third bearing 43 can be made easy. Hereinafter, the installation structure 38 according to the present embodiment will be explained in detail with reference to the first bearing 41.

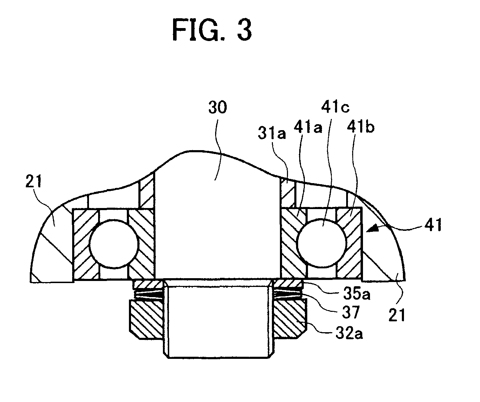

As shown in FIG. 3, the first bearing 41 is constructed by an inner race 41 a, an outer race 41b and revolving bodies 41c of a spherical shape that are arranged to revolve freely between the inner race 41a and the outer race 41b. The outer race 41b constituting the first bearing 41 is fittedly connected and fixed with inside of the gun bracket 21, and is installed to not be able to move in the axial direction of the fulcrum shaft 30. In contrast, the inner race 41a constituting the first bearing 41 is movable only by the distance of the aforementioned gap C in the axial direction of the fulcrum shaft 30. This means that the inner race 41 is installed to be movable in a direction in which there is no longer an axial gap or radial gap, up to a maximum of the distance of the aforementioned gap C in the axial direction of the fulcrum shaft 30 when the U-nuts 32a and 32b provided to the fulcrum shaft 30 are tightened. In order to make the inner race 41 a movable in the axial direction of the fulcrum shaft 30, it is necessary for a force applied to the washer 35a to transfer to the inner race 41a without being hindered by the fulcrum shaft 30. Therefore, the fulcrum shaft 35a may be shaped with a reduced-diameter part at an end thereof such that it is reduced in diameter on the side of the washer 35a so that the washer 35a only abuts with the inner race 41a, for example. In this case, the length of the reduced-diameter part formed with the fulcrum shaft 30 would be set to be at least substantially equal to the distance of the gap C. However, the present invention is not limited thereto, and it should be understood by those skilled in the art that not only forming a reduced-diameter part in the fulcrum shaft 30, but various constitutions are possible to achieve a similar effect as the reduced-diameter part.

When assembling the first bearing 41 constituting the installation structure 38 according to the present embodiment, among the inner race 41a and the outer race 41b constituting the first bearing 41, the outer race 41b is fittedly connected and fixed first with inside of the gun bracket 21. Next, among the inner race 41 a and outer race 41 b constituting the first bearing 41, the outer race 41b is shifted towards the center position in the axial direction of the fulcrum shaft 30, and then the U-nuts 32a and 32b provided to the fulcrum shaft 30 are tightened and fixed in a state in which there is no longer axial gap or radial gap.

Herein, the outside diameter dimension of the first collar 31 a, which is installed on a center side in the axial direction of the fulcrum shaft 30 relative to the first bearing 41, is formed to be smaller than the outside diameter dimension of the inner race 41a of the first bearing 41, and the first collar 31 a is installed so as to abut only with the inner race 41 a in the first bearing 41. In addition, the washer 35a and a pair of the conical springs 37 disposed facing toward each other are provided between the first bearing 41 and the U-nut 32a.

The outside diameter dimensions of the washer 35a and the conical springs 37, which are provided on a center side in the axial direction of the fulcrum shaft 30 relative to the U-nut 32a, are smaller than the outside diameter dimension of the inner race 41 a of the first bearing 41. With this, the U-nut 32a is installed so as to only abut with the outer side of the inner race 41a in the first bearing 41 through the conical springs 37 and the washer 35a. The outside diameter dimension of the first collar 31a, which is installed on a center side in the axial direction of the fulcrum shaft 30 relative to the first bearing 41, is formed to be smaller than the outside diameter dimension of the inner race 41 a in the first bearing 41. With this, the first collar 31 a is installed so as to abut with the inside of the inner race 41 a in the first bearing 41. Therefore, by tightening the U-nut 32a, the force tightening the U-nut 32a can be transmitted through the conical springs 37 and the washer 35a to the inner race 41a constituting the first bearing 41. In the present embodiment, the fulcrum shaft 30 can be tightened by tightening the U-nut 32b first, and tightening the U-nut 32a later.

While the first bearing 41 has been explained in the above, the sixth bearing 46 is installed according to the same structure. However, it is not required for a conical spring 37 to necessarily be installed for the sixth bearing 46. It is sufficient if at least either one among the first bearing 41 and the sixth bearing 46 is installed to be adjacent to a conical spring 37 with either the washer 35a or the washer 35b. In addition, the second bearing 42, the fifth bearing 45, the third bearing 43 and the fourth bearing 44 are also installed substantially in the same structure as the first bearing 41; however, the second bearing 42, the fifth bearing 45, the third bearing 43 and the fourth bearing 44 are different from the first bearing 41 in that the outer race 41 b of the first bearing 41 is fittedly connected with inside the gun bracket 21; whereas, the outer races respectively constituting the second bearing 42, the fifth bearing 45, the third bearing 43 and the fourth bearing 44 are fittedly connected and fixed with inside the second frame 34, and installed so as not to be movable in the axial direction of the fulcrum shaft 30.

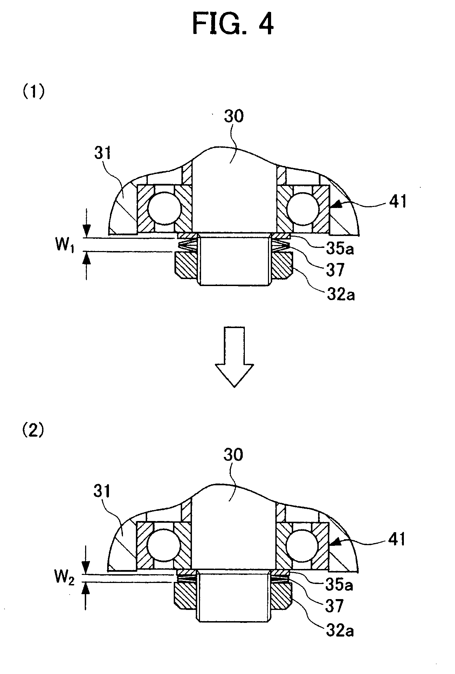

The effects of the conical springs 37 installed between the first bearing 41 and the U-nut 32a while tightening the U-nut 32a will be explained with reference to FIG. 4. FIG. 4(1) is a view showing a state of the conical springs 37 before the U-nut 32a is tightened. FIG. 4(2) is a view showing a state of the conical springs 37 after the U-nut 32a is tightened.

As shown in FIG. 4(1), before the U-nut 32a is tightened, the conical springs 37 are not compressed to the side of first bearing 41 in the axial direction of the fulcrum shaft 30; therefore, the conical springs 37 maintain a dimension W1. Herein, in a case of having tightened the U-nut 32a, the conical springs 37 are pressed to the side of the first bearing 41 in the axial direction of the fulcrum shaft 30 by the U-nut 32a. As a result thereof, the conical springs 37 installed between the U-nut 32a and the washer 35a abutting against the inner race 41 a of the first bearing 41 are compressed to a dimension W2.

The conical springs 37 compressed in the axial direction contract in the axial direction of the fulcrum shaft 30 between the U-nut 32a and the washer 35a every time when the U-nut 32a is tightened. Then, since the conical springs 37 have elasticity in the axial direction of the fulcrum shaft 30, the conical springs 37 press the inner race 41 a of the first bearing 41 via the washer 35a with a pretension force corresponding to the contracted dimension as a resilience against contraction.

In addition, although not illustrated, in a case of having tightened the U-nut 32a installed on one side of the fulcrum shaft 30, the resilience against contraction of the conical springs 37 act in a direction pulling the U-nut 32b installed on the other side of the fulcrum shaft 30 to the center side in the axial direction, similarly to the side of the first bearing 41. Therefore, in this case, the U-nut 32b presses the inner race of the sixth bearing 46 through the washer 35b abutting the U-nut 32b to a center side in the axial direction.

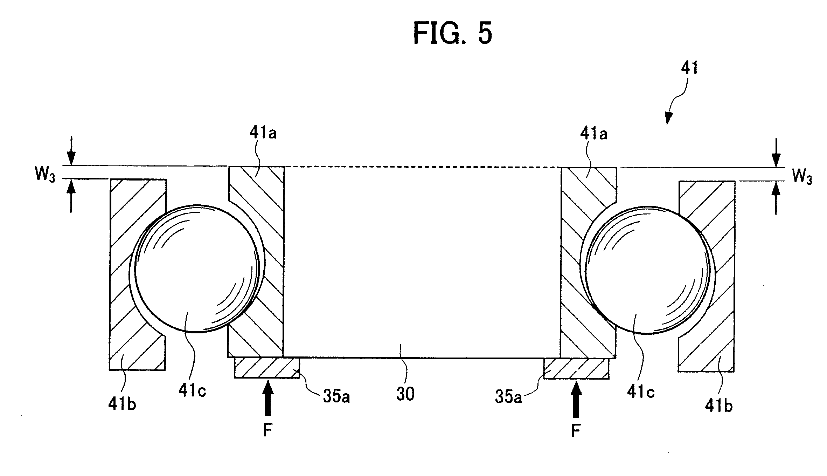

Next, effects when pressing the inner race 41a of the first bearing 41 via the washer 35a by means of the resilience of the conical springs 37 will be explained with reference to FIG. 5.

In a case in which the conical springs 37 installed between the first bearing 41 and the U-nut 32a are compressed as a result of tightening the U-nut 32a, the conical springs 37 cause the inner race 41a of the first bearing 41 to move via the washer 35a by a predetermined dimension W3 to a center side in the axial direction by the resilience F thereof. In contrast, the outer race 41b is fixed to the gun bracket 21, and further, the conical springs 37 and washer 35a abut only with the inner race 41a of the first bearing 41, and do not abut with the outer race 41b; therefore, the outer race 41b will not move in the axial direction, even when the U-nut 32a is tightened. As a result, the inner race 41a of the first bearing 41 will shift by the predetermined dimension W3 in the axial direction relative to the outer race 41b. Since the resilience F of the conical springs 37 required to yield this predetermined dimension W3 can be simply calculated by measuring the compressed dimension of the conical springs 37, which changes by tightening, torque management can be made easy.

Accordingly, as the first bearing 41 is tightened with the U-nut 32a, the inner race 41 a and the outer race 41 b mutually shift while the inner race and outer race of the second bearing 42 mutually shift. Therefore, the play in each bearing can be eliminated, even if a large amount of torque is not applied when the bearings is tightened. It should be noted that, since the remaining second bearing 42 and third bearing 43 are also similar, explanations thereof are omitted.

Therefore, it is possible to fix each bearing with a small amount of torque without applying excessive torque on each bearing, and thus it is possible to achieve a reduction in damage to a casting of the welding gun in which bearings are installed. As a result thereof, the time spent in order to perform operation and maintenance of a welding gun in which bearings are installed can be reduced and the operation and maintenance can be made easy.

It should be noted that, although among the inner race 41 a and the outer race 41 b constituting the first bearing 41, the outer race 41b is set to be the fixed one, and the inner race 41 a, which is the other one, is set to be movable in the axial direction of the fulcrum shaft 30 in the installation structure 38 according to the present embodiment, the present invention is not limited thereto. Therefore, the conical springs and washer may be disposed so as to set the inner race 41 a of the first bearing 41 as the fixed one, and make the outer race 41 b, which is the other one, to be movable in the axial direction, for example. In addition, although the inner races of the first bearing 41, the second bearing 42 and the third bearing 43 are each set to be slidable only by the amount of the gap C, and the first bearing 41, the second bearing 42 and the third bearing 43 are constituted as an installation structure of bearings that are movable in a direction in which there is no longer an axial gap or radial gap in the present embodiment, the present invention is not limited thereto. For example, similarly to the first bearing 41, the second bearing 42 and the third bearing 43, for the sixth bearing 46, fifth bearing 45 and fourth bearing 44 as well, it is also possible to constitute as an installation structure of bearing in which a gap is provided in a center axial direction of the fourth bearing 44, and only ones of either the inner races or the outer races of the sixth bearing 46, the fifth bearing 45 and the fourth bearing 44 are movable in a direction in which there is no longer an axial gap or radial gap in each bearing.

It should be noted that the present invention is not limited to the aforementioned embodiment, and that modifications, improvements, etc. within a scope that can achieve the object of the present invention are included in the present invention. For example, although the welding gun 10 has been explained as an X-type welding gun that opens and closes the first gun arm 11 and the second gun arm 12 fixed to each other with the fulcrum shaft 30 supported by the installation structure 38 as the pivot point in the aforementioned embodiment, the present invention is not limited thereto. The installation structure may be constituted as a C-type welding gun that fixes either one of the first gun arm 11 and the second gun arm 12, and opens and closes the other one. Furthermore, the installation structure of bearings according to the present invention is not limited to a welding gun as the installation structure of bearings that support a fulcrum shaft for pivotally supporting to be rotatable two arms used for sandwiching an object, for example.

## Claims

1. Means for sandwiching an object, specially a welding gun, with two rotatable arms for sandwiching an object, means for sandwiching the object having two gun arms (11, 12), comprising an installation structure with at least one bearing and a fulcrum shaft (30) and tightening means (32a), wherein the bearing supports the fulcrum shaft, wherein this fulcrum shaft pivotally supports the gun arms or rotatable arms, wherein the bearing receives a combined load of an axial load acting in an axial direction of the fulcrum shaft (30) and a radial load acting in a radial direction of the fulcrum shaft (30),
wherein, in the installation structure,
two structure frames (33, 34) located at the trailing end portion of the gun arms and the leading end of a gun bracket (21) which is attached to a trailing end of the arms are connected to the outer race of the bearing, wherein the inner race of the bearing is mounted on the fulcrum shaft;
one race among an inner race (41a) and an outer race (41b) constituting the bearing (41, 42, 43, 44, 45, 46) is fixed in an axial direction, and
an other race among the inner race (41a) and the outer race (41b) is installed to be radially movable, relative to the one race among the inner race (41a) and the outer race (41b),
in a direction in which there is no longer a radial gap or axial gap between a revolving body (41 c), disposed between the inner race (41a) and the outer race (4 1 b) to freely revolve, and the inner race (41a) and the outer race (41b), respectively
**characterized in that**
a predetermined gap (C) is provided between the inner race and a portion of the fulcrum shaft (30a) in an axial direction to the axial center of the fulcrum shaft, and the movement of the inner race is limited by this predetermined gap (C); wherein a conical spring and a washer (35a) are installed between the tightening means that fix the bearing (41, 42, 43, 44, 45, 46) by tightening the bearing (41, 42, 43, 44, 45, 46) so as to support the fulcrum shaft (30) relative to the gun arm (11, 12), wherein the tightening means is applied to the axial outside of the inner race of the bearing;
wherein the fulcrum shaft is shaped with a reduced-diameter part at an end thereof such that it is reduced in diameter on the side of the washer 35a so that the washer only abuts with the inner race of the bearing; and wherein the length of the reduced-diameter part formed with the fulcrum shaft is set to be at least substantially equal to the distance of the predetermined gap (C).

2. A method of installing a bearing (41, 42, 43, 44, 45, 46) that supports a fulcrum shaft (30) pivotally supporting two gun arms (11, 12) constituting a welding gun or two rotatable arms for sandwiching an object to be rotatable, and receives a combined load of an axial load acting in an axial direction of the fulcrum shaft (30) and a radial load acting in a radial direction of the fulcrum shaft (30),
wherein the method comprises steps of:
fixing one race, among an inner race (41a) and an outer race (41b) constituting the bearing (41, 42, 43, 44, 45, 46), in an axial direction;
installing an other race among the inner race (41 a) and the outer race (41b) to be movable in the axial direction;
causing the other race among the inner race (41a) and the outer race (41 b) to move relative to the one race among the inner race (41a) and the outer race (41b) when assembling the bearing (41, 42, 43, 44, 45, 46);
shifting the inner race (41a) and the outer race (41b) relatively in the axial direction; and
fixing the bearing (41, 42, 43, 44, 45, 46) in a state in which there is no longer a radial gap or axial gap between a revolving body (41c), disposed between the inner race (41 a) and the outer race (41b) to freely revolve, and the inner race (41a) and the outer race (41b), respectively,
mounting the outer race of the bearing to a leading end of a gun bracket (21) that is attached to two structure frames (33, 34) located at the leading end portion of the gun arms,
mounting the inner race to the fulcrum shaft (30),
**characterized in that** the method further comprises the steps of
providing a predetermined gap (C) between the inner race and a portion of the fulcrum shaft (30a) in an axial direction to the axial center of the fulcrum shaft, limiting the movement of the inner race by this predetermined gap (C);
tightening the bearing (41, 42, 43, 44, 45, 46) in a state in which a conical spring (37) and a washer (35a) are installed between tightening means (32a) that fix the bearing (41, 42, 43, 44, 45, 46) by tightening the bearing (41, 42, 43, 44, 45, 46) so as to support the fulcrum shaft (30) relative to the gun arm (11, 12);
wherein the tightening means is applied to the axial outside of the inner race of the bearing; wherein the fulcrum shaft is shaped with a reduced-diameter part at an end thereof such that it is reduced in diameter on the side of the washer 35a so that the washer only abuts with the inner race of the bearing; and wherein the length of the reduced-diameter part formed with the fulcrum shaft is set to be at least substantially equal to the distance of the predetermined gap (C).

## Patentansprüche

1. Mittel um einen Gegenstand einzuschließen, insbesondere eine Schweißzange, mit zwei drehbaren Armen zum Einschließen eines Gegenstandes, wobei das Mittel zum Einschließen eines Gegenstandes zwei Zangenarme (11, 12) hat, aufweisend eine Aufbaukonstruktion mit wenigstens einem Lager und einer Drehachse (30) und Spannmittel (32a), wobei das Lager die Drehachse trägt, wobei diese Drehachse die Zangenarme oder drehbaren Arme drehbar lagert, wobei das Lager eine kombinierte Last einer axialen Last, die in einer axialen Richtung auf die Drehachse (30) wirkt und einer radialen Last, die in einer radialen Richtung auf die Drehachse (30) wirkt, aufnimmt,
wobei in der Aufbaukonstruktion,
zwei Konstruktionsrahmen (33, 34), die an dem hinteren Endabschnitt der Zangenarme und dem Vorderende eines Zangenhalters (21), der an einem vorderen Ende der Arme befestigt ist, mit dem äußeren Lagerring des Lagers verbunden sind, wobei der innere Lagerring des Lagers auf der Drehachse befestigt ist;
der innere Lagerring (4 1 a) oder der äußere Lagerring (41b), die das Lager (41, 42, 43, 44, 45, 46) bilden, in axialer Richtung fixiert ist, und
der andere innere Lagerring (41 a) oder äußere Lagerring (41b) so installiert ist, dass er radial bewegbar ist, relativ zu dem inneren Lagerring (41a) oder äußeren Lagerring (41b), in einer Richtung, in der kein radialer Spalt oder axialer Spalt zwischen einem sich drehenden Körper (41c), der zwischen dem inneren Lagerring (4 1 a) und dem äußeren Lagerring (41b) angeordnet ist um sich frei zu drehen, und dem inneren Lagerring (41 a) und dem äußeren Lagerring (4 1 b) mehr vorhanden ist,
**dadurch gekennzeichnet, dass**
ein vorbestimmter Abstand (C) zwischen dem inneren Lagerring und einem Abschnitt der Drehachse (30a) in axialer Richtung in der axialen Mitte der Drehachse vorgesehen ist, und die Bewegung des inneren Lagerrings durch den vorbestimmten Abstand (C) limitiert ist, wobei eine konische Feder und eine Scheibe (35a) zwischen dem Spannmittel, das das Lager (41, 42, 43, 44, 45, 46) durch Spannen des Lagers (41,42, 43, 44, 45, 46) spannt um die Drehachse (30) relativ zu dem Zangenarm (11, 12) zu tragen, installiert ist, wobei das Spannmittel an der axialen Außenseite des inneren Lagerrings des Lagers angewendet wird; wobei die Drehachse mit einem Teil reduzierten Durchmessers an einem ihrer Enden geformt ist, sodass sie auf der Seite der Scheibe (35a) im Durchmesser reduziert ist, sodass die Scheibe nur an dem inneren Lagerring des Lagers anliegt; und wobei die Länge des Teils reduzierten Durchmessers an der Drehachse so geformt ist, um wenigstens im Wesentlichen gleich dem Abstand des vorbestimmten Abstands (C) zu sein.

2. Verfahren zum installieren eines Lager (41, 42, 43, 44, 45, 46), das eine Drehachse (30) lagert, die zwei Zangenarme (11, 12) drehbar trägt, die eine Schweißzange oder zwei drehbare Arme zum Einschließen eines Gegenstands, der drehbar sein soll, tragen, und eine kombinierte Last einer axialen Last, die in axialer Richtung auf die Drehachse (30) wirkt ,und einer radialen Last, die in radialer Richtung auf die Drehwelle (30) wirkt, aufnimmt,
wobei das Verfahren folgende Schritte aufweist:
Befestigen entweder eines inneren Lagerrings (41a) oder eines äußeren Lagerrings (41b), die das Lager (41, 42, 43, 44, 45, 46) bilden, in axialer Richtung;
Installieren des anderen inneren Lagerrings (41a) oder äußeren Lagerrings (41b), um in der axialen Richtung bewegbar zu sein;
Bewirken, dass sich dieser andere innere Lagerring (41a) oder äußere Lagerring (41b) relativ zu dem anderen inneren Lagerring (41a) oder äußeren Lagerring (41b) bewegt, wenn das Lager (41, 42, 43, 44, 45, 46) montiert wird;
Verschieben des inneren Lagerrings (41a) und des äußeren Lagerrings (41b) relativ in axialer Richtung;
Fixieren des Lagers (41, 42, 43, 44, 45, 46) in einem Zustand, in dem kein radialer Spalt oder axialer Spalt mehr zwischen dem sich drehenden Körper (41c), der zwischen dem inneren Lagerring und dem äußeren Lagerring (41b) angeordnet ist um sich frei zu drehen, und dem inneren Lagerring (41a) und dem äußeren Lagerring (41b) mehr vorhanden ist,
Montieren des äußeren Lagerrings des Lagers an einem Vorderende des Zangenhalters (21), der an zwei Konstruktionsrahmen (33, 34) befestigt ist, die an dem vorderen Endabschnitt der Zangenarme angeordnet sind,
Befestigen des inneren Lagerrings an der Drehachse (30),
**dadurch gekennzeichnet, dass** das Verfahren weiterhin folgende Schritte aufweist:
Vorsehen eines vorbestimmten Abstands (C) zwischen dem inneren Lagerring und einem Abschnitt der Drehachse (30a) in axialer Richtung an der axialen Mitte der Drehachse, Begrenzen der Bewegung des inneren Lagerrings durch diesen vorbestimmten Abstand (C); Spannen des Lagers (41, 42, 43, 44, 45, 46) in einem Zustand, indem eine konische Feder (37) und eine Scheibe (35a) zwischen dem Spannmittel (32a), das das Lager (41, 42, 43, 44, 45, 46) durch Spannen des Lagers (41, 42, 43, 44, 45, 46) festigt, um die Drehachse (30) relativ zu dem Zangenarm (11, 12) zu tragen;
wobei das Spannmittel an der axialen Außenseite des inneren Lagerrings des Lagers angewendet wird, wobei die Drehachse mit einem Teil reduzierten Durchmessers an einem ihrer Enden geformt ist, sodass sie im Durchmesser auf einer Seite der Scheibe (35a) reduziert ist, sodass die Scheibe nur an dem inneren Lagerring des Lagers anliegt;
und wobei die Länge des Teils reduzierten Durchmessers, der an der Drehwelle ausgebildet ist, so bemessen ist, um wenigstens im Wesentlichen gleich dem Abstand des vorbestimmten Abstands (C) zu sein.

## Revendications

1. Moyen de prise en sandwich d'un objet, spécialement d'un pistolet de soudage, avec deux bras rotatifs pour prendre en sandwich un objet, le moyen pour prendre en sandwich l'objet comportant deux bras de pistolet (11, 12), comprenant une structure d'installation avec au moins un palier et un arbre de pivot (30) et un moyen de serrage (32a), dans lequel le palier supporte le bras de pivot, dans lequel le bras de pivot supporte en pivotement les bras de pistolet ou les bras rotatifs, dans lequel le palier reçoit une charge combinée d'une charge axiale agissant dans une direction axiale de l'arbre de pivot (30) et d'une charge radiale agissant dans une direction radiale de l'arbre de pivot (30),
dans lequel, dans la structure d'installation,
deux cadres de structure (33, 34) situés au niveau de la portion d'extrémité de fuite des bras de pistolet et de l'extrémité d'attaque d'un support de pistolet (21) qui est attaché à une extrémité de fuite des bras sont raccordés à la cage extérieure de roulement du palier, dans lequel la cage intérieure de roulement du palier est montée sur l'arbre de pivot ;
une cage de roulement parmi une cage intérieure de roulement (41a) et une cage extérieure de roulement (41b) constituant le palier (41, 42, 43, 44, 45, 46) est fixe dans une direction axiale, et
une autre cage de roulement parmi la cage intérieure de roulement (41a) et la cage extérieure de roulement (41b) est installée pour être radialement mobile, par rapport à la première cage de roulement parmi la cage intérieure de roulement (41a) et la cage extérieure de roulement (41b), dans une direction dans laquelle il n'y a plus d'écartement radial ou d'écartement axial entre un corps tournant (41c), disposé entre la cage intérieure de roulement (41a) et la cage extérieure de roulement (41b) pour tourner librement, et la cage intérieure de roulement (41a) et la cage extérieure de roulement (41b), respectivement
**caractérisé en ce que**
un écartement prédéterminé (C) est ménagé entre la cage intérieure de roulement et une portion de l'arbre de pivot (30a) dans une direction axiale vers le centre axial de l'arbre de pivot, et le mouvement de la cage intérieure de roulement est limité par cet écartement prédéterminé (C) ; dans lequel un ressort conique et une rondelle (35a) sont installés entre le moyen de serrage qui fixe le palier (41, 42, 43, 44, 45, 46) par serrage du palier (41, 42, 43, 44, 45, 46) de façon à supporter l'arbre de pivot (30) par rapport au bras de pistolet (11, 12), dans lequel le moyen de serrage est appliqué à l'extérieur axial de la cage intérieure de roulement du palier ;
dans lequel le bras de pivot est formé avec une partie de diamètre réduit à une extrémité de celui-ci de telle sorte qu'il est réduit en diamètre du côté de la rondelle (35a) de sorte que la rondelle seule vienne en butée avec la cage intérieure de roulement du palier ; et dans lequel la longueur de la partie de diamètre réduit formée avec le bras de pivot est fixée pour être sensiblement égale à la distance de l'écartement prédéterminé (C).

2. Procédé d'installation d'un palier (41, 42, 43, 44, 45, 46) qui supporte un arbre de pivot (30) supportant en pivotement deux bras de pistolet (11, 12) constituant un pistolet de soudage ou deux bras rotatifs pour prendre en sandwich un objet à mettre en rotation, et reçoit une charge combinée d'une charge axiale agissant dans une direction axiale de l'arbre de pivot (30) et une charge radiale agissant dans une direction radiale de l'arbre de pivot (30),
dans lequel le procédé comprend les étapes de :
fixation d'une cage de roulement, parmi une cage intérieure de roulement (41a) et une cage extérieure de roulement (41b) constituant le palier (41, 42, 43, 44, 45, 46), dans une direction axiale ;
installation d'une autre cage de roulement parmi la cage intérieure de roulement (41a) et la cage extérieure de roulement (41b) pour qu'elle soit mobile dans la direction axiale ;
fait d'amener l'autre autre cage de roulement parmi la cage intérieure de roulement (41a) et la cage extérieure de roulement (41b) à se déplacer par rapport à la première cage intérieure parmi la cage intérieure de roulement (41a) et la cage extérieure de roulement (41b) lors de l'assemblage du palier (41, 42,43,44,45,46);
décalage de la cage intérieure de roulement (41 a) et la cage extérieure de roulement (41b) relativement dans la direction axiale ; et
fixation du palier (41, 42, 43, 44, 45, 46) dans un état dans lequel il n'y a plus d'écartement radial ou d'écartement axial entre un corps tournant (41c), disposé entre la cage intérieure de roulement (41a) et la cage extérieure de roulement (41 b) pour tourner librement, et la cage intérieure de roulement (41a) et la cage extérieure de roulement (41 b), respectivement,
montage de la cage extérieure de roulement du palier sur une extrémité d'attaque d'un support de pistolet (21) qui est attaché à deux cadres de structure (33, 34) situés au niveau de la portion d'extrémité d'attaque des bras de pistolet,
montage de la cage intérieure de roulement sur l'arbre de pivot (30),
**caractérisé en ce que** le procédé comprend en outre les étapes de
fourniture d'un écartement prédéterminé (C) entre la cage intérieure de roulement et une portion de l'arbre de pivot (30a) dans une direction axiale au centre axial de l'arbre de pivot,
limitation du mouvement de la cage intérieure de roulement par cet écartement prédéterminé (C) ;
serrage du palier (41, 42, 43, 44, 45, 46) dans un état dans lequel un ressort conique (37) et une rondelle (35a) sont installés entre un moyen de serrage (32a) qui fixe le palier (41, 42, 43, 44, 45, 46) par serrage du palier (41, 42, 43, 44, 45, 46) de façon à supporter l'arbre de pivot (30) par rapport au bras de pistolet (11, 12) ;
dans lequel le moyen de serrage est appliqué à l'extérieur axial de la cage intérieure de roulement du palier ; dans lequel le bras de pivot est formé avec une partie de diamètre réduit à une extrémité de celui-ci de telle sorte qu'il est réduit en diamètre du côté de la rondelle (35a) de sorte que la rondelle seule vienne en butée avec la cage intérieure de roulement du palier ; et dans lequel la longueur de la partie de diamètre réduit formée avec le bras de pivot est fixée pour être au moins sensiblement égale à la distance de l'écartement prédéterminé (C).
